# EUROPEAN PATENT APPLICATION

(11) **EP 0 940 783 A2**
(43) Date of publication of application: **08.09.1999**
(21) Application number: 99101215.4
(22) Date of filing: 22.01.1999
(51) Int. Cl.: G07F 19/00, G07F 7/08, H04M 17/00

(54) **Mobile electronic payment terminal**

(30) Priority: 05.03.1998 AU PP220998
(71) Applicant: KEYCORP LIMITED, Chatswood, NSW 2067 (AU)
(72) Inventor: Fitzgerald, Peter, West Pennant Hills, N.S.W. 2125 (AU); Knight, Paul, Lindfield, N.S.W. 2070 (AU)
(74) Representative: Meddle, Alan Leonard

(57) **Abstract**

Disclosed is a mobile electronic payment terminal (10) to which a standard mobile communications device (40) such as a cellular telephone may be connected to enable full mobile EFTPOS transactions to occur. The assembly (5) of terminal (10) and communications device (40) is able to be held by hand. The invention conveniently reduces or eliminates the need for a merchant to purchase a dedicated communications device for EFTPOS transactions thus reducing cost.

## Description

### Technical Field

The present invention relates to mobile transaction terminals for financial transactions, and to terminals for transactions having similar requirements.

### Background Art

Electronic funds transfer has become a commonplace technology throughout the developed world. Using a customer's credit or debit account, funds are electronically debited from the customer's account to pay for the purchased goods or services. The customer enters a personal identification number or code (PIN) or signs a receipt printed by the terminal, depending on the conditions of the card. To date, these transactions have been predominantly conducted via fixed terminals in merchants' premises. The cards have generally been magnetic swipe cards, but will increasingly be smartcards incorporating an IC device. It is also proposed by the financial services industry that stored value or electronic cash type smartcards will be in wide usage in the near future, and trials of this technology are occurring.

It would be desirable to provide electronic funds transfer at point of sale (EFTPOS) terminals which are mobile, for a variety of reasons. A range of potential merchant users of the system do not operate in a way which is suitable for fixed devices - for example, tradesmen such as plumbers and electricians, and service providers who do not operate from a fixed base for payment, for example taxi cab drivers. Moreover, providing a mobile terminal will help to facilitate the acceptance of the changes to financial transactions discussed above.

Mobile EFTPOS systems have been operated at least for taxi cabs. One system used in Australia has operated using a mobile data network. To the extent such proposals have used the mobile cellular voice network, they have assumed that the EFTPOS terminal will include, for example, a GSM capable modem transceiver card.

This has a number of practical problems. The likely users of such terminals discussed above will, in most cases, already have a cellular phone to facilitate their business operations. The proposals to date would require them to have two such services - one for their normal phone, and another for the EFTPOS terminal. A related issue is that the use of the terminal by the intended customer group is likely to be sporadic - perhaps 20 transactions a day for the heaviest users, and in many cases much less than this. As each transaction will take only a minute or less, the EFTPOS terminal will only be used for a very small part of the day. The customer would then be paying system access fees and the like for very intermittent access. Also, by the nature of the usage, the transaction is always initiated from the merchant terminal, so there is no need to have an on-going connection to receive incoming EFTPOS calls.

Australian Application No. 66417/94 by Dynamic Data Systems discloses a funds transaction device utilising a cellular telephone. The phone is connected via cables to the modem and pin pad units. The transaction device as a whole cannot be hand held - the components are merely connected by cables and retained within a relatively bulky carry case.

It is an object of the present invention to provide a hand held mobile transaction terminal for EFTPOS and similar applications which provides full security features while minimising costs for the merchant.

### Summary of the Invention

According to one aspect, the present invention provides a hand held mobile financial transaction terminal, said terminal including
a first card reader for reading a customer card;
a secure keypad;
display means;
processing means for receiving data from said first card reader and said secure keypad, so as to conduct any required local processing, display appropriate messages on said display and communicate with a remote host if required;
interface means for enabling communication and control signals to be sent to and received from a communications device;
a removable communications device; and
mechanical retaining means integral with said terminal for attaching said communications device to said terminal and in contact with said interface means, such that the communications device and terminal operatively form an integrated hand held unit, and allowing selective removal of said communications device, said communications device being capable of independent operation when separated from said terminal.

Preferably, the terminal further incorporates readers for a merchant smartcard, a customer smartcard and a customer magnetic swipe card. It is also preferred that interfaces for external printers and other peripheral devices be provided.

Preferably, the terminal further incorporates a printer for providing a customer receipt. Optionally, means may be provided for receiving a data storage medium or connection to enable the merchant to download data about the transactions which have been processed on the terminal.

The display means may be the display of the communications device in a suitable implementation.

The terminal further incorporates a holder for the inclusion of SAMs (secure access modules) which enable transactions to be performed according to the various card systems in use, for example Mastercard, Visa, and Mondex. In a preferred implementation, the terminal can hold 8 SAMs.

The communications device is preferably a conventional cellular telephone, with a connection which enables command and communications signals to be input from an external device. Such telephones are typically those which are promoted as suitable for connection to a modem or similar device. Most preferably, the telephone operates via a digital system, for example GSM.

The mechanical arrangement for retaining the communications device will of course vary with the device chosen, as will the necessary physical elements of the electrical connections to the device from the interface means. However, it is presently preferred that the communications device be mounted at the rear of the terminal, in a "back to back" arrangement. This allows the size of the assembly to be minimised. It is also intended that what ever the telephone selected, the unit with telephone attached will be of a weight and size that it can be handheld. Depending upon the communications device chosen, satisfactory reception of the cellular signal may require an additional antenna to be mounted on the terminal device, or at least for a mounting point for such an antenna to be provided.

### Description of Drawings

An illustrative embodiment of the present invention will now be discussed with reference to the accompanying figures, in which:
Figure 1 shows the terminal device of the invention with an associated mobile phone mounted to its back;
Figure 2 shows the same device and phone of figure 1 but with the phone being separated from the device;
Figure 3 is a schematic diagram showing the placement and arrangement of features in one implementation of the inventive terminal;
Figures 4 and 5 are side views, partly in section, showing alternative mounting arrangements;
Figure 6 is an exploded view showing assembly of the implementation shown in figures 1 and 2;
Figure 7 is a software flowchart of an implementation of the present invention; and
Figure 8 is a schematic hardware block diagram of an implementation of the present invention.

### Detailed Description

Embodiments of the present invention will now be described with reference to the accompanying figures. It is emphasised that the embodiment shown is only one of many possible - in particular, alternative communication devices could be utilised. The exact arrangement of elements within the terminal may be rearranged within the present inventive concept.

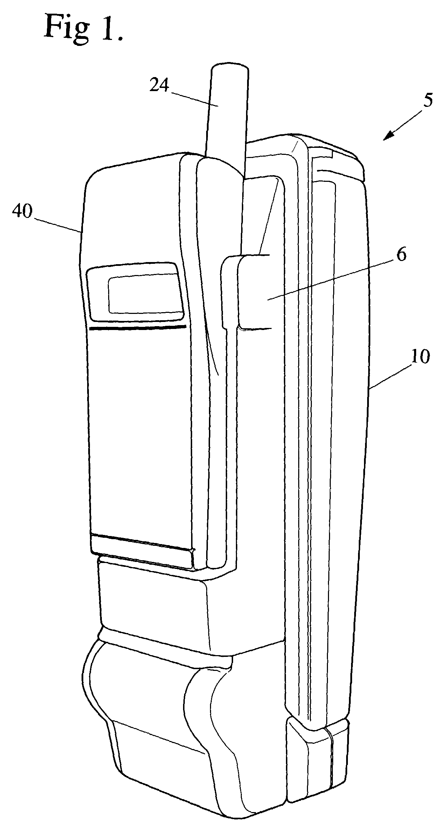

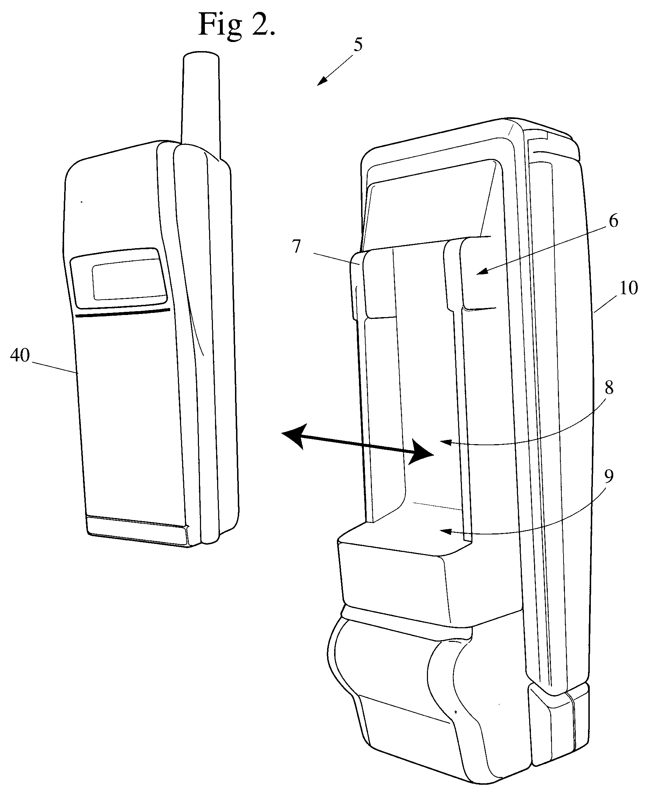

Figures 1 and 2 show one implementation of the present invention, and its mechanical relationship to the accompanying telephone. Although the present invention is applicable to any suitable cellular telephone, it is described with reference to a particular illustrative unit. It will be appreciated that the mechanical engagement and interface arrangements would be very dependent upon the cellular telephone selected.

In Figure 1, there is shown the mobile electronic payment terminal 5 consisting of terminal device 10 with mobile phone 40 mounted to its back. It can be seen that in this implementation, the telephone continues to use its normal antenna 24. In some implementations, for example inside a motor vehicle, it may be necessary to provide an additional antenna device to enable operation of the cellular telephone. It can be seen that the device 5 is easily handheld , even with the phone 40 connected.

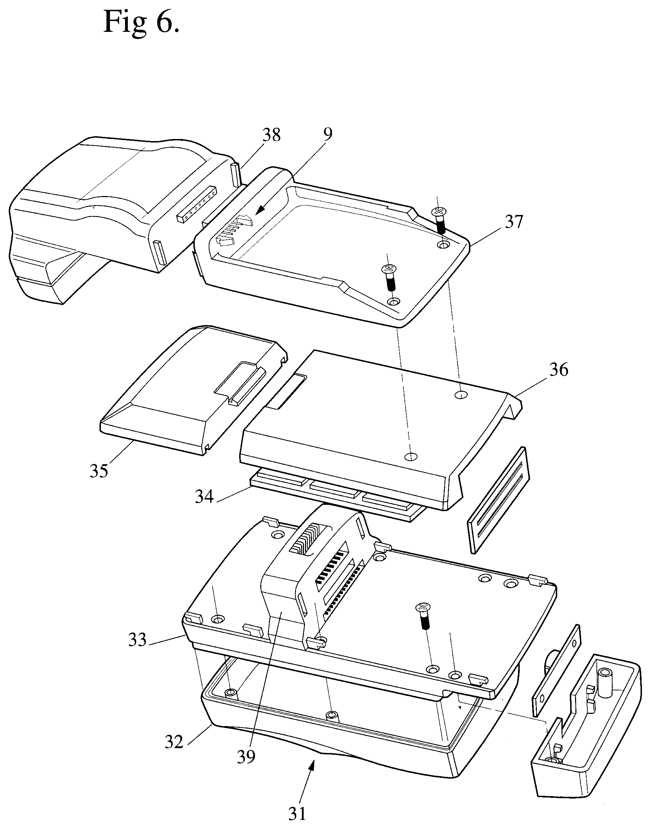

Referring to figure 2, the mechanical retention arrangement relies on the telephone 40 being inserted into cavity 8. The base of the telephone is adapted to engage electrical interface 9 ( not shown here in detail - see figure 6). Additionally, flanges 6 and 7 are formed so as to be forced outwards resiliently when the telephone is inserted. Flanges 6,7 accordingly press in towards the telephone 40 when it is in the cradle 8 so as to hold it firmly in position. However, the telephone 40 can be removed simply by pulling it out of the cradle against the resistance of flanges 6,7. Many other mechanical arrangements are possible, and will depend upon the telephone selected. It will be appreciated that the data connection between phone 40 and interface 9 need not be a physical hard wire contact. Data may be exchanged by way of an infra red link for example.

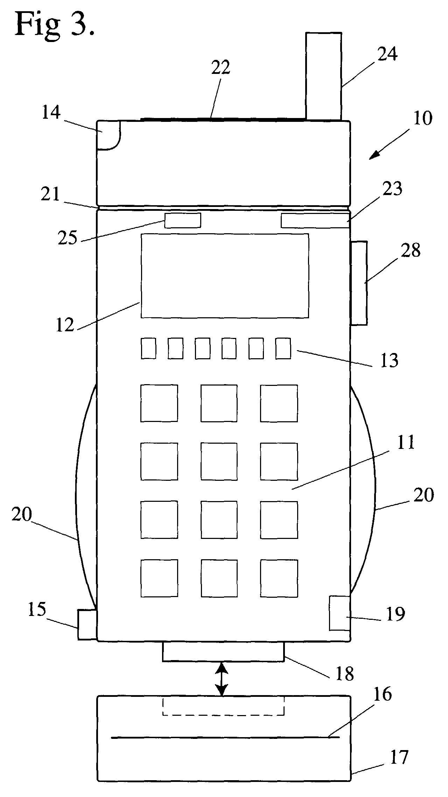

Figure 3 shows schematically the various hardware elements of an embodiment of the terminal 10. As with any EFTPOS device, a secure keypad 11, display 12 and function buttons 13 are provided. The operation of these is conventional and any suitable devices may be used. It is noted that the keypad needs to be of the secure type typically used in EFTPOS terminals, so as to not allow tampering or diversion of the signals prior to presentation to the terminal processor (not shown). At the base of the terminal is a detachable printer module 17, including a paper tear bar 16. The printer module 17 attaches to terminal device 10 via connector 18. This could be used to print both merchant and customer receipts. The printer could operate on plain paper of some type, or print onto a pre-formatted printed card, for example of business card size. Transaction details for the merchant are stored in a suitable memory device within the terminal, for periodic download via card slot 15, for example, a removable memory card or via a cable directly to the merchants PC or similar device. Alternatively, the storage could be direct to a removable card. One implementation utilises the Smart Media cards conventionally used for digital photography, with an interface 28 for this purpose provided on terminal 10. Of course, this downloading of transaction details is purely optional and is not required for the proper functioning of the device. Terminal 10 further includes slot 22 for inserting a customer smartcard, and a magnetic card reader 21, in this case extending horizontally on the casing although clearly any suitable position on the casing could be used. A hand-grip area 20 enables convenient holding of the terminal with or without the associated telephone. Slot 19 allows for expansion cards to be inserted. It will also be possible for the device to include bar code scanning via panel 14.

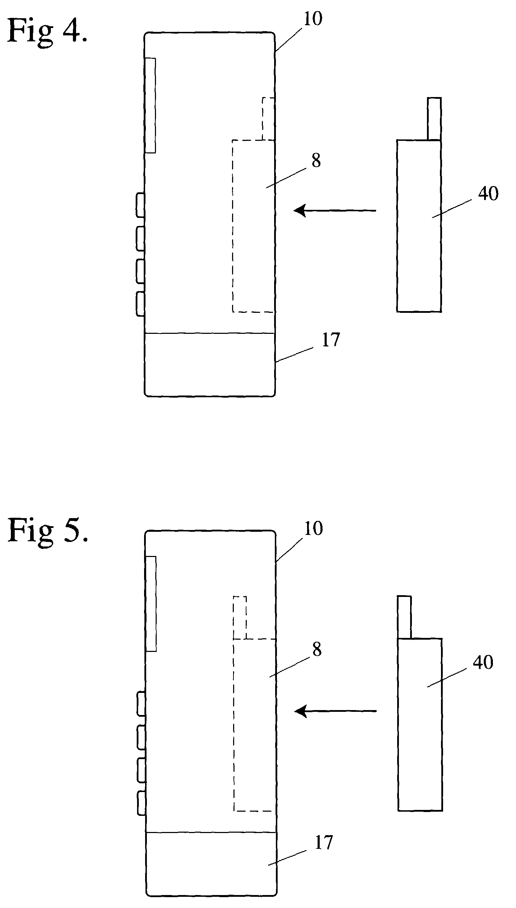

Recess 23 is provided to identify the using corporation, and from the front the antenna 24 on the cellular phone 40 at the rear of the device is visible. Figures 4 and 5 show two alternative arrangements for insertion of the telephone device. In Figure 4, the antenna is left outwardly when the telephone is inserted; in Figure 5, the position is more inwardly. Which of these is preferable will depend upon the cellular telephone selected. It can be seen that the arrangement of Figure 5 is used in the illustrated device in Figure 2.

Figure 6 illustrates in exploded form various elements in one mechanical implementation of the invention. Device 31 is formed from various sub-assemblies, which are illustrated from the rear. Pinpad unit 32 is connected to the secure assembly 33. This contains the encryption and communication software, and is secured, for example by being sealed with a resin material, to minimise the risk of unauthorised access. SAM module 34 fits into the secure module, and is closed in use by cover 36. Unit 35 is the rechargeable battery pack. Telephone cradle 37 connects electrically to the central element 39 of secure assembly 33, and is mechanically secured by screws, as can be seen from the figure. Printer assembly 38 is designed to be readily removable, and can be removed from its connection to the central element 39 by simply unplugging it.

It will be appreciated that the details of the electrical interface to the telephone may vary with the telephone selected. Moreover, if a telephone had an alternative interface type - for example a wireless local radio frequency LAN or infra red link - then this can be readily provided within the terminal.

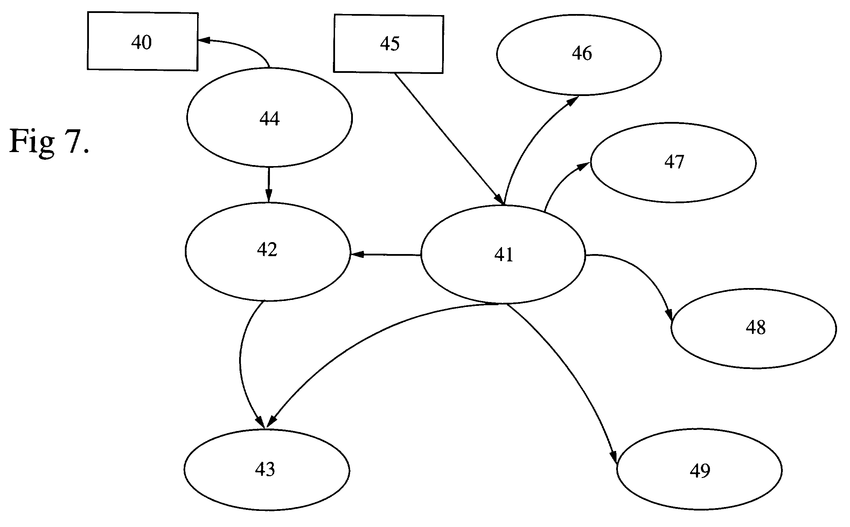

Figure 7 describes in overview the operation of the software in an implementation of the invention. It will be appreciated that much of the software is conventional for an EFT device - the only change is in the ability for the software to control the mobile telephone 40 via the telephone control interface 44.

The EFTPOS functionality module 41 performs the normal encryption and control functions associated with an EFT application. Keys are loaded as required from key loader 45. Records of transactions are stored in the total/reconciliation module 46. An interface to cash registers is provided via ECR interface 47. The printer unit is controlled via print utility 48, and the display via display utility 49.

Normal operations of EFTPOS devices vary from country to country, and will be well understood by those skilled in the art. The details of these operations will therefore not be discussed here.

The EFTPOS functionality module 41 communicates also with the key management module 43, and with messaging unit 42 when a communication is required to be sent to carry out a transaction. Generally, EFT systems generate a session key for each transaction.

Messaging unit 42 communicates with the telephone control interface 44, which allows the EFT unit to control the telephone 40 and make calls to carry out a transaction. The precise details of the interface will depend upon the telephone selected, and would generally rely upon specifications provided by the manufacturer. One way to implement this, which is not preferred, would be to utilise a commercially available modem interface to the telephone, for example one provided by the telephone manufacturer, and integrate this within the terminal housing. Alternatively, the specific interface specifications could be obtained from the manufacturer - these are normally kept confidential by the cellular phone manufacturers. In general, such interfaces operate using a serial communications protocol, similar to modem communications. In the same way that the mechanical restraint for the telephone will need to be altered for different telephones, the interface will need to be customised. One option would be to pre-load a variety of interfaces, with selection of the desired interface via a menu driven display on the screen of the device.

It will also be appreciated that the present invention could be implemented using a telephone having an integrated modem. In that case, terminal 10 would not need to incorporate a modem or similar device, and would merely need the appropriate control software to assume control of telephone dialing functions, etc. A further alternative would be for the phone to be manually dialled by selecting, for example, an appropriate speed dial number, with the terminal assuming control thereafter.

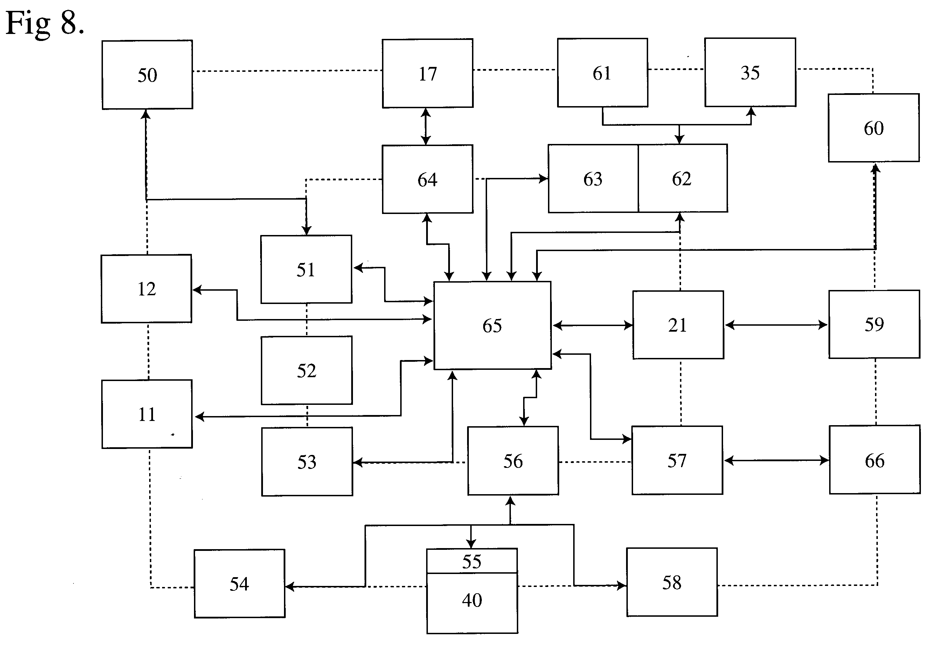

Figure 8 describes an implementation of the electronic systems according to one implementation of the present invention. As is apparent, the CPU 65 controls the overall operation of the system, and allows for commands and data to be sent to the various components. The clock 53, keypad 11, data memory 52, LCD display 12, magnetic card interface 21 (for magnetic card 59), and smartcard interface 57 (for smartcard 66) are all in direct communication with CPU 65. Communications interface 56 provides a bus connection to auxiliary communications device 54, optional external modem 58, and via phone interface 55 to the cellular phone 40.

CPU 65 communicates with program memory 51 to read software instructions, and details of transactions are stored in transaction storage device 50. It will be understood that additional storage, for example via a multi-media card connected externally to the system, could also be provided.

Printer 17 is controlled via printer controller subsystem 64. Power, from both the main battery 35 and back-up battery 61, is supplied via the power supply subsystem 62, under control of the supervisory system 63. Security switches 60 allow the system to be disabled if tampering is detected. It will be appreciated by those skilled in the art that this is essentially conventional EFT software, and any suitable software could be substituted.

A particular advantage of the inventive arrangement is that it allows the cellular telephone to be readily removed from the terminal and utilised as normal by the merchant. This allows the merchant to only subscribe to one telephony service, and use it for both EFTPOS and normal voice telephony. This provides considerable cost advantages for the merchant, both in ongoing costs and in the initial purchase cost. The inventive EFTPOS terminal does not need to incorporate its own communications link to the cellular network. It also provides advantages in, for example, a roaming situation where instead of two different forms of roaming being needed to be effective for both voice and a separate mobile data system, only one need be in place. It will be appreciated that the details of implementation provided are only illustrative, and that a variety of implementations including additional and alternative features are possible within the general inventive concept.

## Claims

1. A hand held mobile financial transaction terminal, said terminal including
a first card reader for reading a customer card;
a secure keypad;
display means;
processing means for receiving data from said first card reader and said secure keypad, so as to conduct any required local processing, display appropriate messages on said display and communicate with a remote host if required;
interface means for enabling communication and control signals to be sent to and received from a communications device; and
mechanical retaining means integral with said terminal for removably attaching said communications device to said terminal and in operational contact with said interface means, such that the communications device and terminal operatively form an integrated hand held unit, and allowing selective removal of said communications device, said communications device being capable of independent operation when separated from said terminal.

2. A hand-held financial transaction terminal according to claim 1 wherein said communications device is a conventional cellular telephone with a connection which enables command and communication signals to be input from an external device.

3. A hand-held financial transaction terminal according to claim 2 further including readers for cards such as merchant smartcards, customer smartcards and customer magnetic swipe cards.

4. A hand-held financial transaction terminal according to claim 3 including interfaces for peripheral devices.

5. A hand-held financial transaction terminal according to claim 4 further including a printer for providing a receipt.

6. A hand-held financial transaction terminal according to claim 5 including means for receiving a data storage device or a connection thereto.

7. A hand-held financial transaction terminal according to claim 6 including a holder for holding SAMs.

8. A hand-held financial transaction terminal substantially as described with reference to the accompanying drawings.
